# EUROPEAN PATENT SPECIFICATION

(11) **EP 1 293 529 B1**
(45) Date of publication and mention of the grant of the patent: **13.12.2006**
(21) Application number: 02102328.8
(22) Date of filing: 06.09.2002
(51) Int. Cl.: C08J 3/20, C08K 3/36, C08L 21/00, C08G 77/02

(54) **Elastomer/reinforcing filler composite**
Elastomer/Füllstoff Verbund
Composite d'elastomère renforcé

(30) Priority: 14.09.2001 US 322065 P
(43) Date of publication of application: 19.03.2003
(73) Proprietor: THE GOODYEAR TIRE & RUBBER COMPANY, Akron, Ohio 44316-0001 (US)
(72) Inventor: Agostini, Giorgio, L-7733, Colmar-Berg (LU); Materne, Thierry Florent Edme, 44286, Richfield (US); Jerome, Robert, 4845, Sart-Jalhay (BE); Calberg, Cedric, 4130, Esneux (BE)
(74) Representative: Kutsch, Bernd

(56) References cited:
- EP-A- 1 000 960

## Description

### Field of the Invention

The invention relates to an eiastomer/reinforcing filler composite in which said elastomer contains a dispersion therein of said reinforcing filler wherein said composite is prepared by forming said filler reinforcement in situ within the elastomer host. Such in-situ formation of reinforcement filler is created by a condensation reaction of a filler precursor within a solvent solution of a diene hydrocarbon based elastomer and with the aid of a phase transfer agent and a condensation reaction promoter. The invention further relates to a tire having at least one component comprised of the resulting elastomer/filler composite. The invention includes a rubber composition of at least two elastomers wherein one of said elastomers is a said pre-formed composite of said elastomer/filler reinforcement. A tire having a component of such rubber composition, particularly a tire tread, is specifically contemplated.

### Background of the Invention

Elastomers are conventionally reinforced with particulate reinforcing fillers such as, for example, carbon black and sometimes precipitated silica.

It is sometimes difficult to obtain an adequate, homogeneous dispersion of the reinforcing filler, particularly silica, in the rubber composition, by conventionally blending the rubber and filler under high shear conditions. Accordingly, however, an adequate, homogeneous, dispersion of the reinforcing filler particles within the rubber composition is sometimes desired.

In one aspect, it has heretofore been proposed to create a dispersion of silica in polysiloxane polymers such as poly(dimethylsiloxane), or (PDMS), elastomer(s) by in-situ formation of silica from a base-catalyzed sol-gel conversion of tetraethoxysilane (TEOS). For example see "Precipitation of Silica-Titania Mixed-Oxide Fillers Into Poly(dimethylsiloxane) Networks" by J. Wen and J. Mark; Rubber Chem and Tech, (1994), Volume 67, No.5, (Pages 806 through 819).

A process of preparing rubber products has been suggested by mixing the TEOS with a solution of unvulcanized rubber in an organic solvent and subjecting it to a sol-gel condensation reaction to provide a finely powdered silica. For example, see JP-A- 9-302152.

Further, a composition has been suggested as comprising a base rubber and globular silica made by a sol-gel method and having an average particle diameter of 10 to 30 microns and specific surface area of 400-700 square meters per gram. The composition is suggested for use in a flap of a tire. For example, see JP-A- 6-145429.

Also, a tread rubber composition has been proposed as a composition of a base rubber and spherical silica prepared by a sol-gel transformation. For example, see JP-A- 6-116440 and corresponding JP-B2- 2591569.

Further, an in-situ formation of silica from a sol gel reaction of TEOS in an organic solution of styrene/butadiene rubber, onto which a bis(3-triethoxysilylpropyl) tetrasulfide has been previously grafted to form triethoxysilyl groups, has been reported. "The Effect of Bis(3-triethoxysilylpropyl) Tetrasulfide on Silica Reinforcement of Styrene-Butadiene Rubber" by Hashim, et al, in Rubber Chem & Tech, 1998, Volume 71, Pages 289 through 299).

In US-A- 6,166,108, a composite of elastomer/reinforcing filler is provided wherein the reinforcing filler is created by a condensation reaction of a filler precursor in situ with a solvent or aqueous dispersion/solution of an elastomer with the aid of a condensation promoter. Optionally, an organosilane is reacted with said filler/filler precursor prior to the completion of said condensation reaction.

In the description of this invention, the term "phr" where used, and according to conventional practice, refers to "parts of a respective material per 100 parts by weight of rubber, or elastomer".

In the description of this invention, the terms "rubber" and "elastomer" where used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

### Summary and Practice of the Invention

In accordance with this invention, a process of preparing a composite according to claim 1 is disclosed. The process includes:
(A) blending an organic solution of a co-solvent and a phase transfer agent with an organic solution of a diene hydrocarbon based elastomer host wherein said elastomer is selected from elastomer host (1) and/or elastomer host (2);
(B) thereafter blending therewith a filler precursor
(C) thereafter blending therewith at least one condensation reaction promoter to promote a condensation reaction of said filler precursor;
(D) optionally blending therewith an organosilane prior to the completion of said condensation reaction; and
(E) recovering the resulting eiastomer/reinforcing filler composite;
   wherein said elastomer host
   (1) is selected from at least one of homopolymers of conjugated dienes, copolymers of conjugated dienes, copolymers of conjugated diene with a vinyl aromatic compound, preferably selected from styrene and alpha-methylstyrene and more preferably styrene and mixtures of such polymers and copolymres; wherein said elastomer host
   (2) is selected from at least one alkoxy metal end functionalized diene-based elastomer having, for example, a general formula (I):

      (I) elastomer - X - (OR)ₙ
   wherein X is selected from silicon, titanium, aluminum and boron, preferably silicon, R is selected from alkyl radicals having from 1 to 4 carbon atoms, preferably methyl, ethyl, n-propyl, isopropyl, n-butyl and isobutyl radicals, more preferably ethyl radicals, and n is 3 for silicon and titanium and is 2 for aluminum and boron, and wherein said elastomer is selected from at least one of homopolymers of conjugated dienes, copolymers of conjugated dienes, copolymers of conjugated diene with a vinyl aromatic compound, preferably selected from styrene and alpha-methylstyrene, and more preferably styrene, and their mixtures;
wherein the solvent for said elastomer is selected from at least one of heptane, toluene, hexane, cyclohexane, xylene and their mixtures, preferably hexane, solvents and the co-solvent for said transfer agent is selected from at least one of tetrahydrofuran, 1,4-dioxane, 2-ethylfurane, furfurylaldehyde and their mixtures , preferably tetrahydrofuran, wherein said phase transfer agent is of the general Formula (II) which is represented in an ionized form: 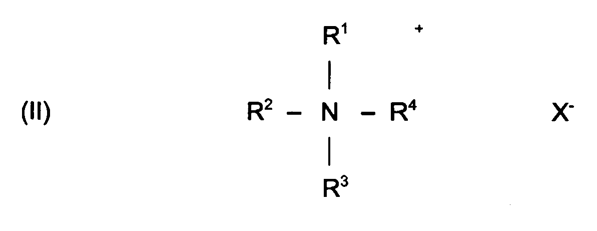 wherein R¹, R², R³ ad R⁴ are alkyl radicals containing from 1 to and including 4 carbon atoms independently selected from methyl, ethyl, n-propyl, sec-propyl, n-butyl and tert-butyl radicals, X is a radical selected from fluorine, chlorine, bromine, iodine, perchlorate, BF₄⁻ and PF₆⁻ radicals, and wherein a preferred phase transfer agent is tetrabutylammonium fluoride.
wherein said filler precursor is selected from at least one material selected from the general formulas (IIIA),(IIIB)and (IIIC):

(IIIA) M(OR)ₓ(R')_{y}

(IIIB) (RO)ₓ(R')_{y}M - O - M'(R')_{z}(RO)_{w}

(IIIC) (RO)ₓ(R')_{y} M - (CH2)ᵣ - M'(R')_{z}(RO)_{w}

wherein M and M' are the same or different and are selected from silicon, titanium, zirconium, boron and aluminum, preferably silicon, where R and R' are individually selected from alkyl radicals having from 1 to 4 carbon atoms, preferably from methyl, ethyl, n-propyl, isopropyl, n-butyl and isobutyl radicals, wherein R is preferably an ethyl radical and R' is preferably a methyl radical, and wherein the sum of each of x+y and w+z integers is equal to 3 or 4 depending upon the valence of the associated M or M', as the case may be and is, therefore, 4 except when its associated M or M' is boron or aluminum for which it is 3, and wherein r is from 1 to 15, preferably from 1 to 6;
wherein said organosilane is at least one material selected from formula (IV), (V) or (VI), namely:
an organosilane polysulfide of Formula (IV) as:

   (IV) Z - R¹ - Sₘ - R¹ - Z

   wherein m is a number in a range of from 2 to 8 and the average for m is in a range of
   (A) 2 to 2.6 or
   (B) 3.5 to 4.5;
   wherein Z is represented by the following formulas, preferably (Z3): 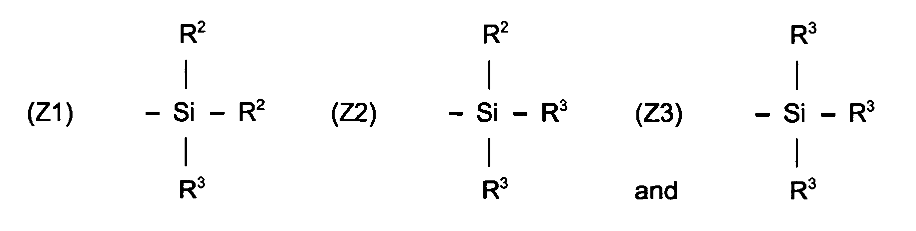 wherein R² is the same or different radical and is individually selected from alkyl radicals having 1 to 4 carbon atoms and phenyl radical; R³ is the same or different alkoxy groups wherein the alkyl radicals of the alkoxy group(s) are alkyl radicals selected from methyl, ethyl, n-propyl, isopropyl, n-butyl and isobutyl radicals; and R¹ is a radical selected from the group consisting of a substituted or unsubstituted alkyl radicals having a total of 1 to 18 carbon atoms and a substituted or unsubstituted aryl radical having a total of 6 to 12 carbon atoms;
an alkyl alkoxy silane of Formula (V) as:

   (V) (OR⁴)₃- Si - R⁵

   where R⁴ may be the same or different alkyl radical selected from methyl, ethyl, n-propyl and isopropyl radicals and R⁵ is selected from alkyl radicals having from 1 to 18 carbon atoms and aryl radicals or alkyl substituted aryl radicals having from 6 to 12 carbon atoms; and
a functional organosilane of Formula (VI) as:

   (VI) (OR⁶)₃ - Si - (CH₂)_{y} - Y

   wherein R⁶ is the same or different alkyl radicals selected from methyl, ethyl, n-propyl and isopropyl radicals, y is an integer of from 1 to 12, and Y is selected from primary amino, mercapto, epoxide, thiocyanato, vinyl, methacrylate, ureido, isocyanato and ethylene diamine radicals.

A significant aspect of this invention is the required use of a phase transfer agent which distinguishes this invention from said US-A- 6,166,108. It is considered herein that the use of a phase transfer agent/co-solvent combination is significant because its use will ease the compatibilization of the aqueous and organic phases, thus favoring a more intimate and homogeneous interpenetration of both phases into each other and therefore a more uniform distribution of the in situ formed filler particles.

A rubber composition may be prepared according to said method(s).

An article may be provided having at least one component comprised of said rubber composition.

A tire may be provided having at least one component comprised of said rubber composition.

A tire may be provided having a tread comprised of said rubber composition.

It is important to appreciate that creation of a elastomer/filler composite is accomplished by first initiating a condensation reaction of the filler precursor within a diene-based elastomer host in the presence of a phase transfer agent/co-solvent combination and, prior to completion of the reaction, optionally reacting an organosilane with the in-situ forming filler material.

In this manner, a quasi sol gel reaction is used, insofar as the initial portion of the condensation reaction is concerned with the aid of a phase transfer agent, for the in-situ formation of the filler dispersion within the host elastomer.

It is considered herein that a significant departure from prior practice is the use of a phase transfer agent/co-solvent combination in order to ease the compatibilization of the aqueous and organic phases, thus favoring a more intimate and homogeneous penetration of both phases and therefore a more uniform distribution of the in situ formed filler particles as well as the optional reaction of the indicated organosilane material(s) with the in-situ formed condensation product prior to completion of the condensation reaction, all within the elastomer host, to form an composite of elastomer reinforcement dispersion of resulting filler material in an unvulcanized elastomer.

In this manner, then, a product of the condensation reaction produced product of a formula (III) material (eg: condensation reaction of TEOS) and the organosilane co-reactant of formula (IV), (V), or (VI) to form a filler dispersion in-situ and within the elastomer host which has a capability of further reaction with the host elastomer itself.

Indeed, the use of a phase transfer agent/co-solvent combination facilities the compatibilization of the aqueous and organic phases, thus favoring a more intimate and homogeneous interpenetration of both phases and therefore a more uniform distribution of the in situ form filler particles in the elastomer host.

A further significant departure from past practice is the in-situ creation, with the aid of a phase transfer agent/ co-solvent combination, of a prescribed filler material, within an alkoxy metal end-functionalized elastomer host, which has a moiety (for example, a trialkoxysilyl or trialkoxytitanyl- moiety) for coupling the elastomer with polar fillers synthesized in-situ and which can, therefore, reduce the need of subsequently adding an additional bifunctional coupling agent, e.g. an organosilane polysulfide, to aid in bonding the in-situ synthesized filler to the elastomer. As a consequence, it is envisioned that, for some circumstances, only a minimal, if any, of such additional bifunctional coupling agent may then be desired.

Various reinforcing fillers may also be subsequently mixed with the elastomer/in-situ formed reinforcing filler composite.

For example, such additional fillers may be carbon black, precipitated silica and other fillers containing hydroxyl groups on their surface such as, for example, aluminum doped precipitated silica and silica-modified carbon blacks, which would have aluminum hydroxide and/or silicon hydroxide on their respective surfaces.

Exemplary of such aluminum doped precipitated silicas are, for example aluminosilicates formed by a co-precipitation of a silicate and an aluminate. An example of modified carbon black is, for example, a carbon black having silicon hydroxide on its outer surface by treatment of carbon black with an organosilane at an elevated temperature or by co-fuming an organosilane and oil at an elevated temperature.

A further example of additional fillers is a starch/synthetic plasticizer composite.

Starch/plasticizer composites have been suggested for use in elastomer compositions for various purposes, including tires. For example, see US-A-5,672,639. In EP-A- 995 775, a first and second coupling agent are sequentially mixed with the rubber composition, thereby substantially decoupling the action of the first coupling agent from the action of the second coupling agent. Various other patents, for example US-A- 5,403,923; 5,374,671; 5,258,430 and 4,900,361 disclose preparation and use of various starch materials. As pointed out in the aforesaid US-A- 5,672,639, starch may be represented, for example, as a carbohydrate polymer having repeating units of amylose (anydroglucopyranose units joined by glucosidic bonds) and amylopetin, a branched chain structure, as is well known to those having skill in such art. Typically, starch may be composed of about 25 percent amylose and about 75 percent amylopectin. The Condensed Chemical Dictionary, Ninth Edition (1977), revised by G.G. Hawley, published by Van Nostrand Reinhold Company, Page 813. Starch can be, reportedly, a reserve polysaccharide in plants such as, for example, corn, potatoes, rice and wheat as typical commercial sources.

Preferably said starch is comprised of amylose units and amylopectin units in a ratio of 15/85 to 35/65 and has a softening point according to ASTM No. D1228 in a range of 180°C to 220°C and where said starch/plasticizer composite has a softening point, reduced from said starch alone, in a range of 110°C to 170°C according to ASTM No. D1228 which is considered herein to be necessary or desirable to provide the starch/plasticizer composite softening point to approach of to be within the temperature region used for the mixing of the rubber composition itself.

As hereinbefore pointed out, the starch itself is typically composed of, for example, amylose units and amylopectin units in a ratio of 15/85 to 35/65, alternatively 20/80 to 30/70, and has a softening point according to ASTM No. D1228 in a range of 180°C to 220°C; and the starch/plasticizer composite has a softening point in a range of 110°C to 170°C according to ASTM No. D1228.

For the starch/plasticizer composite, in general, starch to plasticizer weight ratio is in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained, for example, through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated, hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can conventionally be obtained in powder and in pellet forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled "A Polymer Composition Including Destructured Starch An Ethylene Copolymer", US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an "esterification condensation reaction". Such esterification reactions are well known to those skilled in such art.

In further accordance with this invention, an elastomer blend composition is provided which is comprised of at least two diene-based elastomers of which one elastomer is a pre-formed elastomer/filler dispersion as the said composite of elastomer and dispersion of an situ formed filler of this invention comprised of, based on 100 phr of elastomers,
(A) 10 to 90 phr of at least one diene-based elastomer selected from at least one homopolymer and copolymer of isoprene and 1,3-butadiene and copolymer of at least one diene selected from isoprene and 1,3-butadiene with a vinyl aromatic compound selected from at least one of styrene and alpha-methylstyrene, preferably styrene;
(B) 90 to 10 phr of at least one of said pre-formed composite of elastomer/filler;
(C) at least one of additional reinforcing filler provided, however, that the total of said in-situ formed filler and said additional reinforcing filler are present in an amount of from 30 to 120 phr and where said additional reinforcing filler may be selected, for example, from at least one of precipitated silica, aluminosilicate, carbon black and modified carbon black having hydroxyl groups, eg: hydroxyl and/or silicon hydroxide groups, on its surface; and
(D) optionally a coupling agent having a moiety reactive with said filler(s) and another moiety interactive with said elastomer(s).

In further accordance with this invention, an article is provided having at least one component comprised of said rubber blend composition.

In additional accordance with this invention, an article selected from industrial belts and hoses is provided having at least one component comprised of said rubber blend composition.

In further accordance with this invention, a tire is provided having at least one component comprised of said rubber blend composition.

In additional accordance with this invention, a tire is provided having a tread comprised of said rubber blend composition.

Representative examples of said filler precursor material of the formula (IIIA), are, for example, tetraethoxy ortho silicate, titanium ethoxide, titanium n-propoxide, aluminum tri-sec butoxide, zirconium t-butoxide, zirconium n-butoxide, tetra-n-propoxy zirconium, boron ethoxide, methyl triethoxy silicate and dimethyl diethoxy silicate.

Representative examples of said filler precursor material of the formula (IIIB), are, for example, di-s-butoxyaluminoxy triethoxysilane and hexaethoxydisiloxane.

Representative examples of said filler precursor material of the formula (IIIC), are, for example, bis(triethoxysilyl) methane and bis(triethoxysilyl) ethane.

Representative examples of the organosilane polysulfide of formula (IV) are, for example:
(A) organosilane disulfide materials containing from 2 to 4 sulfur atoms, with an average of from 2 to 2.6, in their polysulfidic bridge, and
(B) organosilane polysulfide materials containing from 2 to 8 sulfur atoms, with an average of from 3.5 to 4.5, in their polysulfidic bridge;
wherein, the alkyl radical for the alkoxy component of the disulfide and polysulfide materials selected from methyl, ethyl and propyl radicals, preferably an ethyl radical, and the alkyl radical for the silyl component is selected from ethyl, propyl, particularly n-propyl, and butyl radicals, preferably an n-propyl radical.

It is to be appreciated that the activity of the sulfur bridge of the organosilane disulfide material (A) and organosilane polysulfide material (B) is very different. In particular, the sulfur atoms of organosilane disulfide material (A), which is primarily a disulfide, have much stronger bonds to each other than the sulfur atoms in the bridge of the organosilane polysulfide material (B). Thus, the organosilane polysulfide material (B) can be somewhat of a sulfur donor (a provider of free sulfur) in a rubber composition at elevated temperatures whereas the sulfur atoms of the organosilane disulfide material (A) are not considered herein to be such a sulfur donor. This phenomenon can have a substantial effect upon a formulation of a sulfur curable rubber composition.

While a bis(3-alkoxysilylalkyl)polysulfide material such as, for example, a bis-(3-triethoxysilylpropyl) disulfide may be a preferable organosilane disulfide (A), representative examples of such organosilane disulfide(A) are
2,2'-bis(trimethoxysilylethyl) disulfide; 3,3'-bis(trimethoxysilylpropyl) disulfide;
3,3'-bis(triethoxysilylpropyl) disulfide; 2,2'-bis(triethoxysilylethyl) disulfide;
2,2'-bis(tripropoxysilylethyl) disulfide; 2,2'-bi(tri-sec.butoxysilylethyl) disulfide;
3,3'-bis(tri-t-butoxyethyl) disulfide; 3,3'-bis(triethoxysilylethyl tolylene) disulfide;
3,3'-bis(trimethoxysilylethyl tolylene) disulfide;
3,3'-bis(triisopropoxypropyl) disulfide; 3,3'-bis(trioctoxypropyl) disulfide;
2,2'-bis(2'-ethylhexoxysilylethyl) disulfide;
2,2'-bis(dimethoxy ethoxysilylethyl) disulfide;
3,3'-bis(methoxyethoxypropoxysilylpropyl) disulfide;
3,3'-bis(methoxy dimethylsilylpropyl) disulfide;
3,3'-bis(cyclohexoxy dimethylsilylpropyl) disulfide;
4,4'-bis(trimethoxysilylbutyl) disulfide;
3,3'-bis(trimethoxysilyl-3-methylpropyl) disulfide;
3,3'-bis(tripropoxysilyl-3-methylpropyl)disulfide;
3,3'-bis(dimethoxy methylsilyl-3-ethylpropyl) disulfide;
3,3'-bis(trimethoxysilyl-2-methylpropyl) disulfide;
3,3'-bis(dimethoxyphenylsilyl-2-methylpropyl) disulfide;
3,3'-bis (trimethoxysilylcyclohexyl) disulfide;
12,12'-bis (trimethoxysilyldodecyl) disulfide;
12,12'-bis (triethoxysilyldodecyl) disulfide;
18,18'-bis (trimethoxysilyloctadecyl) disulfide;
18,18'-bis (methoxydimethylsilyloctadecyl) disulfide;
2,2'-bis (trimethoxysilyl-2-methylethyl) disulfide;
2,2'-bis (triethoxysilyl-2-methylethyl) disulfide;
2,2'-bis (tripropoxysilyl-2-methylethyl) disulfide; and
2,2'-bis(trioctoxysilyl-2-methylethyl) disulfide.

Preferred of such organosilane disulfides are
3,3'-bis(trimethoxysilylpropyl) disulfide; 3,3'-bis(triethoxysilylpropyl) disulfide;
3,3'-bis(methoxy dimethylsilylpropyl) disulfide, and
3,3'-bis(cyclohexoxy dimethylsilylpropyl) disulfide.

While a bis(3-alkoxysilylalkyl)polysulfide material such as, for example, a bis-(3-triethoxysilylpropyl) tetrasulfide or trisulfide may be a preferable organosilane polysulfide (B), representative examples of such organosilane polysulfide (B) are bis-(3-trimethoxylsilylpropyl) trisulfide, bis-(3-trimethoxylsilylpropyl) tetrasulfide, bis-(3-triethoxysilylpropyl) trisulfide, bis-(3-triethoxysilylpropyl) tetrasulfide, bis-(3-triethoxysilylethyltolylene) trisulfide and bis-(3-triethoxysilylethyltolylene) tetrasulfide.

For the alkyl alkoxysilane of Formula (V) the said aryl or substituted aryl radicals may be, for example, benzyl, phenyl, tolyl, methyl tolyl, and alpha methyl tolyl radicals.

A purpose of the alkyl alkoxysilane is, for example, to design specific in-situ synthesized filler morphology and adhesion to the elastomer host matrix.

Representative examples of alkyl alkoxysilanes are, for example but not intended to be limited to, propyltriethoxysilane, methyltriethoxysilane, hexadecyltriethoxysilane, and octadecyltriethoxysilane.

Representative examples of primary amino functional organosilanes of formula (VI) are, for example, 3-amino propyl triethoxysilane, 2-aminoethyl triethoxysilane and 4-aminobutyltriethoxysilane. Representative of mercapto functional organosilanes are, for example, 3-mercapto propyl triethoxysilane, 2-mercaptoethyl triethoxysilane and 4-mercaptobutyl triethoxysilane. Representative of epoxide functional organosilanes is, for example, (3-glycidoxypropyl) triethoxysilane. Representative of thiocyanato functional organosilanes is, for example, 3-thiocyanato propyl triethoxysilane. Representative of vinyl functional organosilanes is, for example, vinyltriethoxysilane. Representative of ureido radicals is ureidopropyltriethoxysilane. Representative of isocyanato functional organosilanes is, for example, 3-isocyanatopropyl triethoxysilane. Representative of ethylene diamine is N(3-triethoxysilyl) propyl ethylenediamine.

A purpose of the functional organosilane of formula (VI) is, for example, to aid in the adhesion of the filler to the elastomer host matrix.

In practice the diene based elastomer(s) for elastomer (1) and the elastomer component of elastomer (2) are contemplated as being selected from, for example, homopolymers and copolymers of monomers selected from isoprene and 1,3-butadiene and copolymers of monomers selected from at least one of isoprene and 1,3-butadiene with an aromatic vinyl compound selected from styrene and alpha-methylstyrene, preferably styrene, and mixtures thereof.

Representative of such elastomers, particularly for elastomer (1) are, for example, cis 1,4-polyisoprene, cis 1,4-polybutadiene, isoprene/butadiene copolymers, styrene/butadiene copolymers including emulsion polymerization prepared copolymers and organic solvent solution polymerization prepared copolymers, styrene/isoprene copolymers, 3,4-polyisoprene, trans 1,4-polybutadiene, styrene/isoprene/butadiene terpolymer, high vinyl polybutadiene having from 35 to 90 percent vinyl groups, and mixtures thereof.

Representative of elastomer components for elastomer (2) are, for example, organic solution polymerization prepared cis 1,4-polyisoprene, cis 1,4-polybutadiene, isoprene/butadiene copolymers, styrene/butadiene copolymers, styrene/isoprene copolymers, 3,4-polyisoprene, trans 1,4-polybutadiene and styrene/isoprene/butadiene terpolymers, and mixtures thereof.

In the practice of this invention, diene-based elastomers (1) may be used as a tin coupled or tin capped elastomer. Such modified diene-based elastomer may, for example, be prepared by polymerizing or copolymerizing, in an organic solution, monomers selected from one or more diene monomers selected from 1,3-butadiene and isoprene or styrene monomers together with 1,3-butadiene and/or isoprene and modifying the living polymer, before terminating the polymerization, with tin.

Such tin coupled or capped elastomers, may be, for example, cis 1,4-polyisoprene, cis 1,4-polybutadiene, styrene/butadiene copolymers, styrene/isoprene/butadiene terpolymers, isoprene/butadiene copolymers and styrene/isoprene copolymers.

An important and usual characterization of such elastomers is that a major portion, preferably at least about 50 percent, and more generally in a range of 60 to 85 percent of the Sn bonds in the elastomer, are bonded to diene units of the copolymer which might be referred to herein as "Sn-dienyl bonds", such as, for example, butadienyl bonds in the case of butadiene terminated polymers.

The modification of the elastomer, such as tin coupling or tin capping, can be accomplished by relatively conventional means and is believed to be well known to those skilled in such art.

For example, a copolymer elastomer can be prepared by copolymerization of styrene with 1,3-butadiene and/or isoprene in an organic solution with an alkyl lithium catalyst. A co-catalyst or catalyst modifier may also be used. Such polymerization methods are well known to those skilled in such art. After formation of the copolymer elastomer, but while the catalyst is still active and, therefore, while the copolymer is still considered a live copolymer capable of further polymerization, the polymerization can be terminated with reacting the live copolymer with a tin compound. Various tin compounds can be used and tin tetrachloride is usually preferred. Thus, taking into account that the valence of tin is four, typically the modified copolymer is considered as being coupled, with an accompanying molecular weight jump, or increase, with the modified copolymer being in what is sometimes referred to as a star shaped, or configured, coupled elastomer. On the other hand, if an trialkyl tin compound is used, then only a single halogen is available and the modified copolymer is a capped copolymer. Such preparation of coupled and capped copolymers prepared by organolithium catalysis is believed to be well known to those having skill in such art. It is to be appreciated that the modified copolymer may be a mixture of coupled and capped copolymer.

Examples of tin modified, or coupled, styrene/butadiene might be found in, for example, US-A- 5,064,910.

The tin coupled polymer or copolymer elastomer can also be tin coupled with an organo tin compound such as, for example, alkyl tin trichloride, dialkyl tin dichloride and trialkyl tin monochloride, yielding variants of a tin coupled copolymer with the trialkyl tin monochloride yielding simply a tin terminated copolymer.

Accordingly, a tin coupled elastomer may be the product of reacting at least one conjugated diene or by reacting styrene together with at least one conjugated diene; wherein said diene is selected from 1,3-butadiene and isoprene, in an organic solvent solution and in the presence of an organolithium based catalyst followed by reacting the live polymer with at least one compound having the formula:

R⁷ ₄₋ₙ- SnX_{n,}

wherein n is an integer from 1 to and including 4, X is a halogen selected from chlorine, iodine and bromine, preferably chlorine; and R⁷ is an alkyl radical selected from methyl, ethyl, propyl and butyl radicals.

In another aspect of the invention, as hereinbefore discussed, the diene-based elastomer may be end functionalized as exemplified by formula (I) with, for example, an alkoxysilane unit. Such end functionalization may be accomplished, for example, by quenching an anionic polymerization of the monomers in an organic solvent solution during a formation of a diene-based elastomer using, for example, chlorotriethoxysilane or 3,3' bis(triethoxypropyl) disulfide.

For such end functionalization of elastomers, preferably the elastomers are prepared by organic solvent polymerization and selected from at least one of styrene/butadiene copolymer, isoprene/butadiene copolymer, cis 1,4-polybutadiene, cis 1,4-polyisoprene, styrene/isoprene copolymers, high vinyl polybutadiene having a vinyl content in a range of from 35 to 90 and styrene/isoprene/butadiene terpolymer elastomers.

For the carbon black reinforcement having silicon hydroxide on the surface thereof, such modified carbon black may be prepared, for example, by treatment of a reinforcing carbon black with an organo silane at an elevated temperature or by co-fuming an organo silane and an oil as hereinbefore discussed.

In the practice of this invention, as hereinbefore discussed, the in-situ formed filler reinforcement may be formed in an elastomer host which is contained in an organic solvent solution or in a latex, preferably in an organic solvent solution.

For example, the elastomer may be provided in an organic solvent solution by, for example,
(A) dissolving the elastomer in a suitable organic solvent, such as for example, toluene, hexane, cyclohexane or THF (tetrahydrofurane) or
(B) by providing the elastomer as a cement, or polymerizate, namely in the solution resulting from an organic solvent solution polymerization of appropriate monomers to provide the elastomer in solution.
Such organic solvent solution polymerization of monomers to obtain elastomers is well known to those having skill in such art.

Such elastomer may be provided as a latex by polymerizing appropriate monomers in an aqueous soap solution to form the elastomer based latex. Such preparation of latices is well known to those having skill in such art.

Also, in the practice of this invention, the in-situ formed reinforcing filler may also be formed by blending the elastomer and filler pre-cursor(s) and facilitating the said condensation reaction of the filler precursor in an internal rubber mixing apparatus such as, for example, an Banbury type of mixer or in an extruder. Internal rubber and polymer mixers are well known.

Thus, the internal mixer may be, for example, at least one internal batch mixer (eg: Banbury type of rubber mixer) in which the ingredients are introduced, sequentially introduced where appropriate into one or more sequential internal mixing steps and removed from the mixer after the mixing/reaction has reached a desired degree of completion.

Continuous reaction mixing techniques may be also be used. For example, a continuous extruder mixer may be used. Extruder mixers are usually presented as dual screw extruders in which the screws may revolve in a co-rotation mode or a counter rotation mode and raised portions of their respective shafts may intermesh. It is preferred that the screw profile has an L/D (length over diameter) ratio in a range of from 5 to 70 to depending somewhat upon a desired mixing efficiency and degree of ingredient dispersion within the elastomer blend. Such reactive extruder mixing of various elastomers with various ingredients is well known to those having skill in such art. For example, see US-A- 5,711,904. For example, it is contemplated that the extruder may be a dual screw extruder where the elastomer host, filler precursor and condensation promoter are initially introduced into the extruder mixer and the optional organosilane is subsequently added to the reaction mixture within the extruder after 50 to 70 percent of the overall, total, reaction time and at a corresponding spaced apart length of the extruder from the said initial introduction of elastomer and precursor.

For preparation of the elastomer/filler composite by immersion of the elastomer host in a liquid filler precursor, the elastomer is simply allowed to swell in the presence of and consequently to absorb the liquid precursor. Accordingly, the liquid precursor is simply imbibed into to the elastomer host. Usually, the amount of liquid precursor is adjusted so that little, if any, liquid precursor remains unabsorbed. Otherwise, either the swelled elastomer is simply removed from container in which it has been immersed in the liquid precursor or, in an alternative, the liquid precursor is simply drained from such container. In any event, the condensation reaction promoter is applied, usually directly, to the swelled elastomer, usually to its outer surface, and is allowed to disperse via the absorbed precursor within the swelled elastomer and to thereby to promote the condensation reaction of the filler precursor from within the elastomer host and cause the in-situ creation, or formation, of the filler dispersion. The optional organosilane is subsequently added to the swelled elastomer before the completion of the condensation reaction. It may be envisioned, for example, that the elastomer host may be cut into individual segments, the segments immersed and mixed, for example by stirring, in a suitable container with a liquid filler pre-cursor and a resulting swelled elastomer removed from any remaining liquid filler precursor. The condensation promoter may then be applied to the swelled elastomer host fragments. The optional organosilane is subsequently added to the swelled elastomer before the completion of the condensation reaction.

In the practice of this invention, various acidic or basic condensation promoters may be used and, in general, are understood to be well known to those having skill in such art. For example, representative of basic promoters are, for example, ammonia, ammonium hydroxide, N-butylamine, terbutylamine, tetrahydrofuran (THF), sodium fluoride, various proteins linear polyamines such as, for example, pentaethylene hexamine, diaminopropane, diethylenetriamine, triethylenetetramine and polyallylamines such as, for example, poly(allylaminehydrochloride), poly(L-lysine hydrobromide), poly(L-arginine hydrochloride) and poly(L-histidine hydrochloride). For example, representative of acidic promoters are phosphoric acid, acetic acid, hydrofluoric acid and sulfuric acid.

Metal salts and metal oxides can also be used as promoters or inhibitors of silane condensation reactions (i.e.: Lewis acid or base reactions). Examples of metal salts are, for example zinc sulfate, aluminate sulfate, zinc stearate, and aluminum stearate. Examples of metal oxides are, for example, zinc oxide and aluminum oxide.

Typical catalysts for condensation reaction curing of silicon rubber might also be used. Examples are bis(2-ethylhexanoate) tin and bis(neodecanoate) tin.

The actual selection of condensation promoter will depend somewhat upon whether the elastomer might be provided in an organic solvent solution or as a latex and can readily be determined by one having skill in such art.

Thus, the condensation reaction may be controlled by an acid or a base promoter, depending somewhat upon the kinetics of filler formation required and the in-situ filler structure desired.

For example, while individual circumstances may vary, an acid or base condensation reaction promoter, or any other suitable condensation reaction promoter, may be applied sequentially to promote, first, the alkoxy silane hydrolysis (acidic promoter) and then, secondly, the silane condensation reaction (basic promoter) leading to the actual in-situ filler formation.

A particular advantage in using the aforesaid pre-formed elastomer which contains the in-situ formed filler in an elastomer composition is the reduction of mixing energy required from an elastomer-filler composite with optimum, homogeneous filler dispersion, namely a more homogeneous dispersion within the elastomer with less agglomeration of the individual filler particles together to form larger aggregates. This is desirable because it can both improve the processing of an elastomer composition during the mixing of the elastomer with other rubber compounding ingredients and, also various of the physical properties of the resulting rubber composition as well as various tire performances properties. Such improvements may be evidenced, for example in a reduction of a rubber composition's hysteresis and an improvement in a rubber composition's resistance to abrasion, apparently as a result of forming a more homogeneous dispersion of the in-situ formed filler and improvement in an efficiency of the interaction of the filler with the elastomer host which may be particularly significant for a tire tread rubber composition.

It is contemplated that the pre-formed rubber composite of this invention enables a more efficient, integral dispersion of the reinforcing filler and particularly the hydrophillic filler particles (eg: silica, aluminosilicate and titanium dioxide) into a rubber composition.

It is contemplated that the practice of this invention promotes better handling of desirable fillers, limit partial re-agglomeration of the in-situ formed particles, and thereby enable a better, more homogeneous dispersion thereof in the elastomer host and in the resulting rubber composition.

In the practice of this invention, it is contemplated that the pre-formed integral composite of diene-based elastomer reinforcing filler as an situ synthesized filler will reduce the agglomeration effect of the filler particles, and thereby promote a more homogeneous dispersion of the hydrophilic filler (eg: silica) in the rubber composition.

In one aspect of the invention, it is desired that the rubber composition of pre-formed elastomer composite and additional elastomer(s) is worked by
(A) thermomechanically mixing the composite, in at least two sequential mixing steps, with conventional compounding ingredients, all in the absence of curatives
   (1) to a maximum temperature in a range of 160°C to 180°C and for a duration of time, upon reaching said maximum temperature, in a range of 1 to 10 minutes at a temperature within 5°C to 10°C of said maximum temperature or
   (2) to a maximum temperature in a range of 155°C to 165°C and for a duration of time upon reaching said maximum temperature, in a range of four to twenty minutes at a temperature within 5°C to 10°C of said maximum temperature, followed by
(B) a final thermomechanical mixing step in which sulfur curatives and cure accelerators are mixed with said mixture for one to four minutes to a temperature of 90°C to 120°C; whereas the rubber mixture is cooled to a temperature below 40°C between each of the aforesaid mixing stages.

Depending somewhat upon the rotor speed of the mixer, the fill factor and the rubber composition itself, the time to reach the maximum temperature may range from 2 to 5 minutes. The term "fill factor" is believed to be well known to those having skill in such art as the portion of the volume of the internal mixer occupied by the rubber composition itself. Other parameters being equal, a rubber composition having a higher oil content will usually take a longer time to reach the maximum temperature.

In practice, an internal rubber mixer is preferred for the individual mixing steps.

In the recited mixing process the term "curatives" in intended to refer to rubber vulcanization curatives in a conventional sense, meaning sulfur together with accompanying sulfur vulcanization accelerators or perhaps, although not preferred, peroxide curatives might be used.

Classical rubber-reinforcing carbon blacks considered for use in this invention, including carbon blacks used for preparation of the carbon black composite, are, for example, carbon blacks having an Iodine Adsorption Number (ASTM test D1510) in a range of 30 to 180 and sometimes even up to about 250 g/kg and a DBP (dibutylphthalate) Adsorption Number (ASTM test D2414) in a range of 20 to 150 cm³/100g. Representative examples of such carbon blacks, and references to associated ASTM test methods, may be found, for example, in The Vanderbilt Rubber Handbook, 1990 edition on Pages 416 through 418.

The resultant physical properties obtained for rubber compositions of this will depend somewhat upon the carbon black composite used, the coupler used and the rubber composition itself.

The rubber composite itself can also be provided as being a sulfur cured composition through vulcanization of the uncured elastomer composition. The sulfur curing is accomplished in a conventional manner, namely, by curing under conditions of elevated temperature and pressure for a suitable period of time.

The curatives for sulfur curing the rubber composition are curatives conventionally used for sulfur curable elastomers which typically include sulfur and one or more appropriate cure accelerators and sometimes also a retarder. Such curatives and use thereof for sulfur curable elastomer compositions are well known to those skilled in the art.

Sequential mixing processes for preparing sulfur curable rubber compositions in which elastomers and associated ingredients exclusive of curatives are first mixed in one or more sequential steps, usually called a "non-productive mixing step(s)" followed by a final mixing step for adding curatives, usually called a "productive mixing step", are also well known to those skilled in the art.

In the practice of this invention, additional diene-based elastomers can be blended with the aforesaid elastomer composition such as homopolymers and copolymers of conjugated dienes and copolymers of conjugated diene(s) and vinyl aromatic compound. Such dienes may, for example, be selected from isoprene and 1,3-butadiene and such vinyl aromatic compounds may be selected from styrene and alpha-methylstyrene. Such elastomer, or rubber, may be selected, for example, from at least one of cis 1,4-polyisoprene rubber (natural and/or synthetic, and preferably natural rubber), 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber, trans 1,4-polybutadiene rubber (70 to 95 percent trans), low vinyl polybutadiene rubber (10 to 30 percent vinyl), high vinyl polybutadiene rubber having from 35 to 90 percent vinyl 1,2-content and emulsion polymerization prepared butadiene/acrylonitrile copolymers.

It is to be appreciated that additional silica, particularly precipitated silica, and/or carbon black might also be blended with the said composite of pre-formed reinforced elastomer and additional elastomer(s).

It is intended for the practice of this invention that the term "precipitated silica", when used herein, also includes precipitated aluminosilicates as a form of precipitated silica. The precipitated silicas are, for example, those obtained by the acidification of a soluble silicate, e.g., sodium silicate, generally exclusive of silica gels.

Such silicas might be characterized, for example, by having a BET surface area, as measured using nitrogen gas, preferably in the range of 40 to 600, and more usually in a range of 50 to 300 square meters per gram (m²/g). The BET method of measuring surface area is described by Brunauer, Emmett and Teller: Journal of American Chemical Society (1938), Page 309. An additional reference might be DIN Method 66131.

The silica may also be typically characterized by having a DBP (dibutylphthalate) Absorption Number in a range of 100 to 400, and more usually 150 to 300 cc/100 g.

Various commercially available precipitated silicas may be considered for use in this invention such as, only for example herein, and without limitation, silicas commercially available from PPG Industries under the Hi-Sil trademark with designations 210, 243, etc; silicas available from Rhone-Poulenc with, for example, designations of Zeosil 1165MP and Zeosil 165GR, and silicas available from Degussa AG with, for example, designations VN2, VN3, Ultrasil 3370, Ultrasil 7000 and Ultrasil 7005 etc. and from Huber, for example, as Zeopol 8745 and Zeopol 8715.

Various couplers may be used and many are well known to those skilled in such art. For example bis(trialkoxysilylalkyl) polysulfides may be used which contain from two to eight sulfur atoms in their polysulfidic bridge, with an average of 2 to 5 sulfur atoms. For example, the polysulfidic bridge may contain an average of from 2 to 2.6 or 3.5 to 4 connecting sulfur atoms in its polysulfidic bridge. The alkyl groups may be selected, for example, from methyl, ethyl, and propyl groups. Therefore, a representative coupler might be, for example, a bis(triethoxysilylpropyl) polysulfide containing from 2 to 8, with an average of from 2 to 2.6 or from 3.5 to 4 connecting sulfur atoms in its polysulfidic bridge.

It is to be appreciated that the coupler, if in a liquid form, might be used in conjunction with a carbon black carrier, namely, pre-mixed with a carbon black prior to the addition to the rubber composition, and such carbon black is usually to be included in the amount of carbon black accounted for in the rubber composition formulation.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

In the preparation of the rubber composition typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others such as, for example, those disclosed in The Vanderbilt Rubber Handbook (1978), Pages 344 through 346. Typical amounts of antiozonants comprise 1 to 5 phr.

Typical amounts of fatty acids, if used, which can include stearic acid, palmitic acid, linoleic acid or mixtures of one or more fatty acids, can comprise 0.5 to 5 phr.

Often stearic acid is used in a relatively impure state and is commonly referred to in the rubber compounding practice as "stearic acid" and is so referred to in the description and practice of this invention.

Typical amounts of zinc oxide comprise 1 to 5 phr. Typical amounts of waxes comprise 1 to 5 phr. Often microcrystalline waxes are used. Typical amounts of peptizers, if used, comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to about 8 phr, with a range of from 1 to 2.5, sometimes from 1 to 2, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 2, phr. In another embodiment, combinations of a primary and a secondary accelerator might be used with the secondary accelerator being used in amounts of 0.05 to 3 phr in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The presence and relative amounts of the above ingredients, other than carbon black and coupler, are not considered to be the primary subject of this invention which is more primarily directed to the preparation and use of the aforesaid pre-formed elastomer composite with the integral silica dispersion

The ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, carbon black and coupling agent if used, are mixed in one or more non-productive mix stages. The terms "non-productive" and "productive" mix stages are well known to those having skill in the rubber mixing art.

In at least one of the non-productive (NP) mixing stages, the materials are thermomechanically mixed and the mixing temperature is allowed to reach a temperature of, for example, between 140°C and 190°C.

The rubber composition of this invention can be used for various purposes. For example, it can be used for various tire compounds. Such tires can be built, shaped, molded and cured by various methods which are known and will be readily apparent to those having skill in such art.

The invention may be better understood by reference to the following examples in which the parts and percentages are by weight unless otherwise indicated.

### EXAMPLE I

In this Example, a pre-formed elastomer/filler composite is prepared by first dissolving 6 grams of butadiene/styrene copolymer elastomer in 100 ml of hexane solvent, then adding a one molar solution tetrabutyl ammonium fluoride as a phase transfer agent in tetrahydrofuran as a co-solvent, followed by adding a liquid filler precursor to the solution, in which a condensation of the filler precursor is contemplated as initiating due to a very small amount of inherent moisture with in the elastomer/phase transfer agent/filler precursor solution, followed by mixing therewith a condensation promoter to promote the condensation reaction and to thereby synthesize a filler dispersion in-situ within the elastomer host via a condensation reaction.

Such elastomer/filler composite is referred to herein as Sample B.

Another elastomer/filler composite is similarly prepared but without the co-solvent and chain transfer agent and referred to herein as Control Sample A.

It is to be appreciated that this Example is intended to be somewhat representative of an elastomer cement obtained by copolymerizing styrene and 1,3-butadiene in an organic solvent since, in practice, it would usually be more preferable to utilize an elastomer cement rather than to re-dissolve an elastomer in an organic solvent.

By the methods described in this Example, composites are formed of the elastomer with an integral dispersion therein of the resulting in-situ formed filler reinforcement within the host elastomer.

For this Example, the elastomer used for Samples A and B is prepared by copolymerizing styrene and 1,3-butadiene in an organic solvent solution in a presence of a lithium based catalyst. An organosilane is added at the end of the polymerization reaction to functionalize the living end of the anionic polymer. The solvent is then removed to allow polymer recovery. The elastomer may be referred to in this Example as an "S-SBR" having a bound styrene content of about 18 percent.

The experimentation for Sample B is conducted by first dissolving the S-SBR in a solvent, wherein a solution of the tetrahydrofuran co-solvent and the tetrabutyl ammonium fluoride as a phase transfer agent, are added to the S-SBR solution. Liquid tetraethoxysilane (TEOS), as a filler precursor, is then added to the elastomer solution, in a ratio of about 1/2 of TEOS to elastomer and water is then added, together with a 1,3-diaminopropane condensation reaction promoter (promoter is about 2 weight percent of the entire mixture including the water).

The condensation reaction is allowed to proceed at about room temperature, or about 25°C, while stirring the mixture.

The content of the in-situ formed silica filler dispersion of the elastomer/filler composite may be determined by thermogravimetric analysis. The in-situ formed silica particles are contemplated as being substantially spherical in shape with a diameters ranging from 5 to 300 nm, with some dendrite expansion, as may be determined by transmission electron microscopy.

For Sample A, 5.6 ml of TEOS was first added to the polymer solution (6g of polymer in 100 ml of heptane), followed by adding 3 ml of 1,3-diaminopropane in order to promote TEOS condensation reaction followed by adding 0.7 ml of water plus 7 ml of dioxane in order to condense TEOS and form filler in situ.

For Sample B, 5 ml of a (Butyl)₄NF solution in tetrahydrofuran diluted in 2 ml of dioxane was first added to the polymer solution (6g of polymer in 100 ml of heptane), followed by addition of 5.6 ml of TEOS, followed by addition of 3 ml of 1,3-diaminopropane in order to promote TEOS condensation reaction, followed by addition of 0.7 ml of water and 7 ml of dioxane in order to condense TEOS and form the filler in situ.

**Table 1**

| | Control | |
|---|---|---|
| Materials | Sample A | Sample B |
| Elastomer | S-SBR | S-SBR |
| Filler precursor | TEOS | TEOS |
| Phase transfer addition | No | Yes |
| Co-solvent addition | No | Yes |
| In-situ formed | 18 | 20 |

The in situ formed filler aggregates contained in Samples A and B were examined by both visual observations and an examination by a transmission electron microscope (TEM).

A summary of the observations of the in situ formed filler, which for convenience are referred to herein as Silica Sample A and Silica Sample B to refer to Sample A and Sample B of this Example, is shown in the following Table 2:

In Table 2, the term "TGA analysis" means Thermo-Gravimetric - Analyses.

**Table 2**

| Sample | Silica Content (%) Based on TGA analysis | Mean Diameter of Silica Aggregates | Observed Dispersion on on TEM grid | No. of Aggregates per 266,800 nm² |
|---|---|---|---|---|
| A | 11 | 39 nm | very good | 46 |
| B | 14 | 31 nm | very good | 135 |

Photographs were taken of the observed TEM view. The dimensions of the surface unit of the photograph reviewed for this Example was 580 x 460 nanometers (nm). The number of silica aggregates per reviewed surface unit resulted from counting all of the aggregates observed on one or two representative reviewed surface units of a TEM photograph

From Table 2 it can be seen that the particle size decreases with increasing fluoride salt concentration while the number of particle per surface unit increases resulting in an higher number of particles with smaller size.

This is considered herein to be significant because it improves reinforcement because of the smaller particle size which should also improve abrasion resistance and hysteresis for the rubber composition.

## Claims

1. A process of preparing an elastomer/filler reinforcement composite comprising a dispersion of said filler reinforcement formed in-situ within an elastomer wherein said process comprises:
(A) blending an organic solution of a co-solvent and a phase transfer agent with an organic solution of a diene hydrocarbon based elastomer host;
(B) thereafter blending therewith a filler precursor;
(C) thereafter blending therewith at least one condensation reaction promoter to promote a condensation reaction of said filler precursor;
(D) optionally blending therewith an organosilane prior to the completion of said condensation reaction; and
(E) recovering the resulting eiastomer/reinforcing filler composite;
wherein said elastomer host is selected from
(1) at least one of homopolymers of conjugated dienes, copolymers of conjugated dienes, copolymers of conjugated diene with a vinyl aromatic compound, selected from styrene and alpha-methylstyrene and mixtures of such polymers and copolymers; and/or
(2) at least one alkoxy metal end functionalized diene-based elastomer having a general formula (I):
(I) elastomer - X - (OR)ₙ
wherein X is selected from silicon, titanium, aluminum and boron, R is selected from alkyl radicals having from 1 to 4 carbon atoms, and n is 3 for silicon and titanium and is 2 for aluminum and boron, and wherein said elastomer is selected from at least one of homopolymers of conjugated dienes, copolymers of conjugated dienes, copolymers of conjugated diene with styrene and/or alpha-methylstyrene, and mixtures thereof;
wherein the solvent for said elastomer is selected from at least one of heptane, toluene, hexane, cyclohexane, xylene and their mixtures and the co-solvent for said transfer agent is selected from at least one of tetrahydrofuran, 1,4-dioxane, 2-ethylfurane, furfurylaldehyde and their mixtures, wherein said phase transfer agent is of the general Formula (II) which is represented in an ionized form: 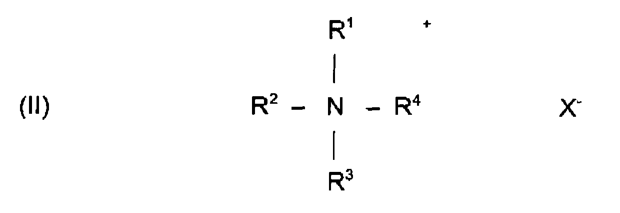 wherein R¹, R², R³ ad R⁴ are alkyl radicals containing from 1 to and including 4 carbon atoms independently selected from methyl, ethyl, n-propyl, sec-propyl, n-butyl and tert-butyl radicals, X is a radical selected from fluorine, chlorine, bromine, iodine, perchlorate, BF₄⁻ or PF₆⁻ radicals, and tetrabutylammonium fluoride,
wherein said filler precursor is selected from at least one material selected from the general formulas (IIIA),(IIIB)and (IIIC):
(IIIA) M(OR)ₓ(R')_{y}
(IIIB) (RO)ₓ(R')_{y}M-O- M'(R')_{z}(RO)_{w}
(IIIC) (RO)ₓ(R')_{y} M - (CH2)ᵣ - M'(R')_{z}(RO)_{w}
wherein M and M' are the same or different and are selected from silicon, titanium, zirconium, boron and aluminum, where R and R' are individually selected from alkyl radicals having from 1 to 4 carbon atoms, and wherein the sum of each of x+y and w+z integers is equal to 3 or 4 depending upon the valence of the associated M or M', as the case may be and is, therefore, 4 except when its associated M or M' is boron or aluminum for which it is 3, and wherein r is from 1 to 15;
wherein said organosilane is at least one material selected from formula (IV), (V) or (VI), namely:
an organosilane polysulfide of Formula (IV) as:
(IV) Z - R¹ - Sₘ - R¹ - Z
wherein m is a number in a range of from 2 to 8 and the average for m is in a range of
(1) 2 to 2.6 or
(2) 3.5 to 4.5;
wherein Z is represented by the following formulas: 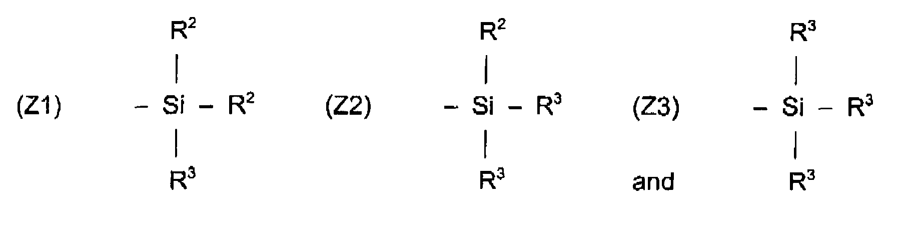 wherein R² is the same or different radical and is individually selected from alkyl radicals having 1 to 4 carbon atoms and phenyl radical; R³ is the same or different alkoxy groups wherein the alkyl radicals of the alkoxy group(s) are alkyl radicals independently selected from methyl, ethyl, n-propyl, isopropyl, n-butyl and isobutyl radicals; and R¹ is a radical selected from substituted or unsubstituted alkyl radicals having a total of 1 to 18 carbon atoms and a substituted or unsubstituted aryl radical having a total of 6 to 12 carbon atoms;
an alkyl alkoxy silane of Formula (V) as:
(V) (OR⁴)₃ - Si - R⁵
where R⁴ may be the same or different alkyl radical selected from methyl, ethyl, n-propyl and isopropyl radicals and R⁵ is selected from alkyl radicals having from 1 to 18 carbon atoms and aryl radicals or alkyl substituted aryl radicals having from 6 to 12 carbon atoms; and
a functional organosilane of Formula (Vl) as:
(VI) (OR⁶)₃ - Si - (CH₂)_{y} - Y
wherein R⁶ is the same or different alkyl radicals selected from methyl, ethyl, n-propyl and isopropyl radicals, y is an integer of from 1 to 12, and Y is selected from primary amino, mercapto, epoxide, thiocyanato, vinyl, methacrylate, ureido, isocyanato and ethylene diamine radicals.

2. The process of claim 1, wherein said co-solvent is selected from heptane, hexane and cyclohexane or their mixtures and said chain transfer agent is tetrabutylammonium fluoride.

3. The process of any of the preceding claims, wherein said elastomer host is selected from at least one of homopolymers and copolymers of 1,3-butadiene and isoprene, copolymers of styrene with at least one of 1,3-butadiene and isoprene styrene, tin coupled polymers and copolymers of 1,3-butadiene and isoprene and tin coupled copolymers of styrene with at least one of 1,3-butadiene and isoprene, and mixtures thereof, or
wherein said elastomer host is selected from at least one of homopolymers and copolymers of 1,3-butadiene and isoprene and copolymers of 1,3-butadiene and/or isoprene with styrene and where said end functionalization is an alkoxysilane wherein the alkyl radicals of said alkoxysilane are selected from at least one of ethyl, methyl, n-propyl and isopropyl radicals, and mixtures thereof.

4. The process of any of claims 1 and 2, wherein R is selected from methyl, ethyl, n-propyl, isopropyl, n-butyl and isobutyl radicals.

5. The process of any of the preceding claims, wherein said filler precursor is selected from at least one of
(A) tetraethoxy ortho silicate, titanium ethoxide, titanium n-propoxide, aluminum tri-sec butoxide, zirconium t-butoxide, zirconium n-butoxide, tetra-n-propoxy zirconium and boron ethoxide, methyl triethoxy silicate and dimethyl diethoxy silicate; or
(B) di-s-butoxyaluminoxy triethoxysilane and hexaethoxydisiloxane.

6. The process of any of the preceding claims, wherein said organosilane polysulfide material is a bis-(3-triethoxysilylpropyl) disulfide having an average of from 2 to 2.6 or from 3.5 to 4 sulfur atoms in its polysulfidic bridge.

7. The process of any of the preceding claims, wherein said alkyl alkoxy silane (VI) is selected from at least one of propyltriethoxysilane, methyltriethoxysilane, hexadecyltriethoxysilane or octadecyltriethoxysilane;
wherein said functional organosilane of formula (VI) is selected from 3-amino propyl triethoxysilane, 2-aminoethyl triethoxysilane, 4-aminobutyltriethoxysilane, 3-mercapto propyl triethoxysilane, 2-mercaptoethyl triethoxysilane, 4-mercaptobutyl triethoxysilane, (3-glycidoxypropyl) triethoxysilane, 3-thiocyanato propyl triethoxysilane, vinyltriethoxysilane, ureidopropyltriethoxysilane, 3-isocyanatopropyl triethoxysilane, or N(3-triethoxysilyl) propyl ethylenediamine.

8. The process of claim 3, wherein said tin coupled elastomer is the product of reacting at least one conjugated diene or by reacting styrene together with at least one conjugated diene, wherein said diene is selected from 1,3-butadiene and isoprene, in an organic solvent solution and in the presence of an organolithium based catalyst followed by reacting the live polymer with at least one compound having the formula R⁷₄ - SnXₙ, wherein n is an integer from 1 to and including 4, X is chlorine; and R⁷ is an alkyl radical selected from methyl, ethyl, propyl or butyl radicals.

## Patentansprüche

1. Verfahren zum Herstellen eines Elastomer/Füllstoffverstärkungsverbundstoffs, umfassend eine Dispersion der Füllstoffverstärkung, gebildet in-situ in einem Elastomer, worin das Verfahren Folgendes umfasst :
(A) Mischen einer organischen Lösung eines Hilfslösemittels und eines Phasentransfermittels mit einer organischen Lösung eines Elastomerwirts auf Dienkohlenwasserstoffbasis ;
(B) anschließendes Mischen mit einem Füllstoffvorläufer
(C) anschließendes Mischen mit wenigstens einem Kondensationsreaktionsaktivator zum Beschleunigen einer Kondensationsreaktion des Füllstoffvorläufers ;
(D) optionales Mischen mit einem Organosilan vor dem Ende der Kondensationsreaktion ; und
(E) Gewinnen des entstehenden Elastomer/-Verstärkungsfüllstoffverbundstoffs ;
worin der Elastomerwirt ausgewählt ist aus
(1) wenigstens einem von Homopolymeren konjugierter Diene, Copolymeren konjugierter Diene, Copolymeren von konjugiertem Dien mit einer aromatischen Vinylverbindung, ausgewählt aus Styrol und Alphamethylstyrol, und Gemischen aus solchen Polymeren und Copolymeren ; und/oder
(2) wenigstens einem mit Alkoxymetall endfunktionalisiertem Elastomer auf Dienbasis der allgemeinen Formel (I) :
(I) Elastomer - X - (OR)ₙ
worin X ausgewählt ist aus Silicium, Titan, Aluminium und Boron, R ausgewählt ist aus Alkylradikalen mit 1 bis 4 Kohlenstoffatomen, und n 3 ist für Silicium und Titan und 2 ist für Aluminium und Boron, und worin das Elastomer ausgewählt ist aus wenigstens einem von Homopolymeren konjugierter Diene, Copolymeren konjugierter Diene, Copolymeren von konjugiertem Dien mit Styrol und/oder Alphamethylstyrol und Gemischen davon ;
worin das Lösemittel für das Elastomer ausgewählt ist aus wenigstens einem von Heptan, Toluen, Hexan, Cyclohexan, Xylen und deren Gemischen, und das Hilfslösemittel für das Transfermittel ausgewählt ist aus wenigstens einem von Tetrahydrofuran, 1,4-Dioxan, 2-Ethylfuran, Furfurylaldehyd und deren Gemischen, worin das Phasentransfermittel die allgemeine Formel (II) hat, die in einer ionisierten Form dargestellt ist : 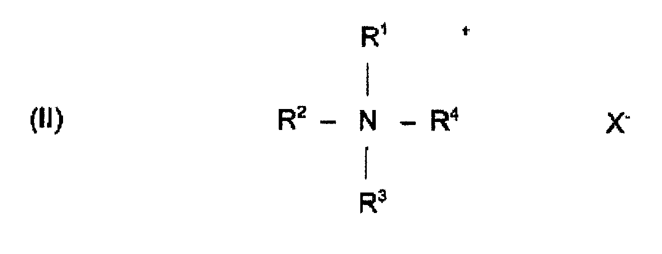 worin R¹, R², R³ und R⁴ Alkylradikale mit 1 bis einschließlich 4 Kohlenstoffatomen sind, unabhängig ausgewählt aus Methyl-, Ethyl-, n-Propyl-, Sec-Propyl-, n-Butyl- und Tert-Butylradikalen, X ein Radikal ist, ausgewählt aus Fluor-, Chlor-, Brom-, Iod-, Perchlorat-, BF₄⁻- oder PF₆⁻-Radikalen, und Tetrabutylammoniumfluorid ;
worin der Füllstoffvorläufer ausgewählt ist aus wenigstens einem Material, ausgewählt aus den allgemeinen Formeln (IIIA),(IIIB) und (IIIC) :
(IIIA) M(OR)x(R')_{y}
(IIIB) (RO)x(R')_{y}M - O - M' (R')₂ (RO)_{w}
(IIIC) (RO)x(R')_{y}M - (CH2)ᵣ - M' (R')₂ (RO)_{w}
worin M und M' gleich oder verschieden sind und ausgewählt sind aus Silicium, Titan, Zirconium, Boron und Aluminium, worin R und R' individuell ausgewählt sind aus Alkylradikalen mit 1 bis 4 Kohlenstoffatomen, und worin die Summe jeder der x+y- und w+z-Ganzzahlen gleich 3 oder 4 ist, abhängig von der Valenz des zugehörigen M oder M', je nach Fall und darum 4 ist, außer wenn das zugehörige M oder M' Boron oder Aluminium ist, für das es 3 ist, und worin r zwischen 1 und 15 liegt ;
worin das Organosilan wenigstens ein Material ist, ausgewählt aus der Formel (IV),(V) oder (VI), nämlich :
ein Organosilan-Polysulfid der Formel (IV), wie :
(IV) Z - R¹ - Sₘ - R¹ - Z
worin m eine Zahl in einem Bereich von 2 bis 8 ist und der Mittelwert für m in einem Bereich ist von
(1) 2 bis 2,6 oder
(2) 3,5 bis 4,5 ;
worin Z dargestellt ist durch die folgenden Formeln : 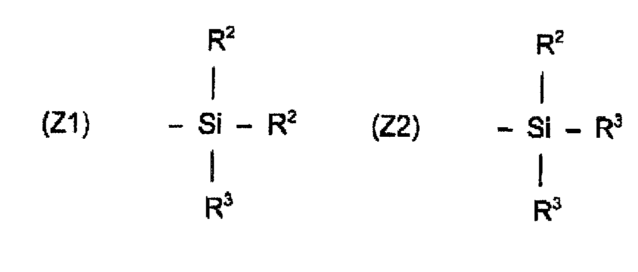 und 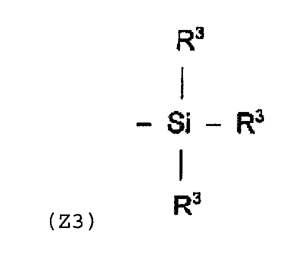 worin R² dasselbe oder verschiedene Radikal ist und individuell ausgewählt ist aus Alkylradikalen mit 1 bis 4 Kohlenstoffatomen und Phenylradikal ; R³ dieselbe oder verschiedene Alkoxygruppe ist, worin die Alkylradikale der Alkoxygruppe (n) Alkylradikale sind, unabhängig ausgewählt aus Methyl-, Ethyl-, n-Propyl-, Isopropyl-, n-Butyl- und Isobutylradikalen ; und R¹ ein Radikal ist, ausgewählt aus substituierten oder unsubstituierten Alkylradikalen mit insgesamt 1 bis 18 Kohlenstoffatomen und einem substituierten oder unsubstituierten Arylradikal mit insgesamt 6 bis 12 Kohlenstoffatomen ;
ein Alkylalkoxysilan der Formel (V), wie :
(V) (OR⁴)₃ - Si - R⁵
worin R⁴ dasselbe oder verschiedene Alkylradikal sein kann, ausgewählt aus Methyl-, Ethyl-, n-Propyl- und Isopropylradikalen, und R⁵ ausgewählt ist aus Alkylradikalen mit 1 bis 18 Kohlenstoffatomen und Arylradikalen oder alkylsubstituierten Arylradikalen mit 6 bis 12 Kohlenstoffatomen ; und
ein funktionelles Organosilan der Formel (VI), wie :
(VI) (OR⁶)₃ - Si - (CH₂)_{y} - Y
worin R⁶ dasselbe oder verschiedene Alkylradikal ist, ausgewählt aus Methyl-, Ethyl-, n-Propyl- und Isopropylradikalen, y eine Ganzzahl von 1 bis 12 ist, und Y ausgewählt ist aus primären Amino-, Mercapto-, Epoxid-, Thiocyanato-, Vinyl-, Methacrylat-, Ureido-, Isocyanato- und Ethylendiaminradikalen.

2. Verfahren nach Anspruch 1, worin das Hilfslösemittel ausgewählt ist aus Heptan, Hexan und Cyclohexan oder deren Gemischen und das Kettentransfermittel Tetrabutylammoniumfluorid ist.

3. Verfahren nach einem der vorhergehenden Ansprüche, worin der Elastomerwirt ausgewählt ist aus wenigstens einem von Homopolymeren und Copolymeren von 1,3-Butadien und Isopren, Copolymeren von Styrol mit wenigstens einem von 1,3-Butadien und Isoprenstyrol, mit Zinn gekoppelten Polymeren und Copolymeren von 1,3-Butadien und Isopren und mit Zinn gekoppelten Copolymeren von Styrol mit wenigstens einem von 1,3-Butadien und Isopren und Gemischen davon, oder
worin der Elastomerwirt ausgewählt ist aus wenigstens einem von Homopolymeren und Copolymeren von 1,3-Butadien und Isopren und Copolymeren von 1,3-Butadien und/oder Isopren mit Styrol und worin die Endfunktionalisierung ein Alkoxysilan ist, worin die Alkylradikalen des Alkoxysilans ausgewählt sind aus wenigstens einem von Ethyl-, Methyl-, n-Propyl- und Isopropylradikalen und Gemischen davon.

4. Verfahren nach einem der Ansprüche 1 und 2, worin R ausgewählt ist aus Methyl-, Ethyl-, n-Propyl-, Isopropyl-, n-Butyl- und Isobutylradikalen.

5. Verfahren nach einem der vorhergehenden Ansprüche, worin der Füllstoffvorläufer ausgewählt ist aus wenigstens einem von
(A) Tetraethoxyorthosilikat, Titaniumethoxid, Titanium-n-propoxid, Aluminium-tri-sec-butoxid, Zirkonium-t-butoxid, Zirkonium-n-butoxid, Tetra-n-propoxyzirkonium und Boronethoxid, Methyl-Triethoxysilikat und Dimethyl-Diethoxysilikat ; oder
(B) Di-s-butoxyaluminoxytriethoxysilan und Hexaethoxydisiloxan.

6. Verfahren nach einem der vorhergehenden Ansprüche, worin das Organosilan-Polysulfidmaterial ein Bis-(3-triethoxysilylpropyl)disulfid mit durchschnittlich von 2 bis 2,6 oder von 3,5 bis 4 Schwefelatomen in seiner Polysulfidbrücke ist.

7. Verfahren nach einem der vorhergehenden Ansprüche, worin das Alkylalkoxysilan (VI) ausgewählt ist aus wenigstens einem von Propyltriethoxysilan, Methyltriethoxysilan, Hexadecyltriethoxysilan oder Octadecyltriethoxysilan ;
worin das funktionelle Organosilan der Formel (VI) ausgewählt ist aus 3-Aminopropyltriethoxysilan, 2-Aminoethyltriethoxysilan, 4-Aminobutyltriethoxysilan, 3-Mercaptopropyltriethoxysilan, 2-Mercaptoethyltriethoxysilan, 4-Mercaptobutyltriethoxysilan, (3-Glycidoxypropyl)triethoxysilan, 3-Thiocyanatopropyltriethoxysilan, Vinyltriethoxysilan, Ureidopropyltriethoxysilan, 3-Isocyanatopropyltriethoxy-silan oder N(3-Triethoxysilyl)propylethylendiamin.

8. Verfahren nach Anspruch 3, worin das mit Zinn gekoppelte Elastomer das Produkt von Reagieren von wenigstens einem konjugierten Dien oder durch Reagieren von Styrol zusammen mit wenigstens einem konjugierten Dien ist, worin das Dien ausgewählt ist aus 1,3-Butadien und Isopren, in einer organischen Lösemittellösung und in Gegenwart eines auf Organolithium basierten Katalysators, gefolgt durch Reagieren des lebenden Polymers mit wenigstens einer Verbindung der Formel R⁷₄₋ₙ - SnXₙ, worin n eine Ganzzahl von 1 bis einschließlich 4 ist, X Chlor ist ; und R⁷ ein Alkylradikal ist, ausgewählt aus Methyl-, Ethyl-, Propyl- oder Butylradikalen.

## Revendications

1. Procédé pour préparer un composite élastomère/matière de charge faisant office de renforcement comprenant une dispersion de ladite matière de charge à titre de renforcement formée in situ au sein d'un élastomère, dans lequel ledit procédé comprend le fait de :
(A) mélanger une solution organique d'un cosolvant et d'un agent de transfert de phase avec une solution organique d'un élastomère hôte à base d'un hydrocarbure diénique ;
(B) mélanger ensuite avec le premier mélange, un précurseur de matière de charge ;
(C) mélanger ensuite avec le premier mélange, au moins un promoteur de réaction de condensation pour favoriser une réaction de condensation dudit précurseur de matière de charge ;
(D) le cas échéant, mélanger avec le premier mélange, un organosilane avant de mettre un terme à ladite réaction de condensation ; et
(E) récupérer le composite élastomère/matière de charge de renforcement résultant ;
dans lequel ledit élastomère hôte est choisi parmi le groupe comprenant :
(1) au moins un membre choisi parmi le groupe constitué par des diènes conjugués, des copolymères de diènes conjugués, des copolymères de diènes conjugués avec un composé vinylaromatique représentant au moins un membre choisi parmi le groupe constitué par le styrène et l'alphaméthylstyrène ; et par des mélanges desdits polymères et desdits copolymères ; et/ou
(2) au moins un élastomère à base diénique possédant, à une de ses extrémités, une fonctionnalité alcoxymétal, répondant à la formule générale (I) :
(I) élastomère - X - (OR)ₙ
dans laquelle X est choisi parmi le groupe comprenant un atome de silicium, un atome de titane, un atome d'aluminium et un atome de bore, R est choisi parmi des radicaux alkyle contenant de 1 à 4 atomes de carbone ; et n est égal à 3 pour le silicium et pour le titane et est égal à 2 pour l'aluminium et pour le bore ; et dans laquelle ledit élastomère représente au moins un membre choisi parmi le groupe constitué par des homopolymères de diènes conjugués, des copolymères de diènes conjugués, des copolymères de diènes conjugués avec du styrène et/ou de l'alphaméthylstyrène, et par leurs mélanges ;
dans lequel le solvant pour ledit élastomère représente au moins un membre choisi parmi le groupe constitué par l'heptane, le toluène, l'hexane, le cyclohexane, le xylène et leurs mélanges ;
et le cosolvant pour ledit agent de transfert représente au moins un membre choisi parmi le groupe constitué par le tétrahydrofuranne, le 1,4-dioxanne, le 2-éthylfuranne, le furfurylaldéhyde et leurs mélanges ;
dans lequel ledit agent de transfert de phase répond à la formule générale (II) représentée sous une forme ionisée : 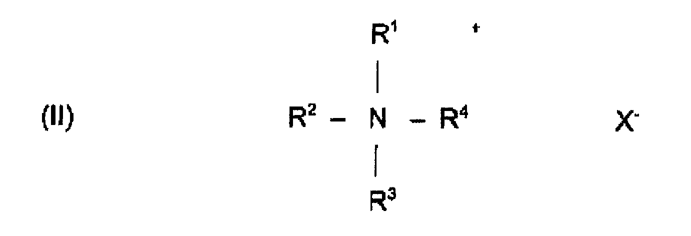 dans laquelle R¹, R², R³ et R⁴ représentent des radicaux alkyle contenant de 1 à 4 atomes de carbone inclus, choisis de manière indépendante parmi le groupe comprenant un groupe méthyle, un groupe éthyle, un groupe n-propyle, un groupe sec-propyle, un groupe n-butyle, et un groupe tert-butyle ; X représente un radical choisi parmi le groupe comprenant un atome de fluor, un atome de chlore, un atome de brome, un atome d'iode, un radical perchlorate, un radical BF₄⁻ ou un radical PF₆⁻, et un radical de fluorure de tétrabutylammonium ;
dans lequel ledit précurseur de matière de charge représente au moins une matière choisie parmi le groupe de formules comprenant les formules générales (IIIA), (IIIB) et (IIIC) :
**(IIIA)** **M(OR)ₓ(R')_{y}**
**(IIIB)** **(RO)ₓ(R')_{y}M-O- M'(R')_{z}(RO)_{w}**
**(IIIC)** **(RO)ₓ(R')_{y} M - (CH₂)ᵣ - M'(R')_{z}(RO)_{w}**
dans laquelle M et M' sont identiques ou différents et sont choisis parmi le groupe comprenant un atome de silicium, un atome de titane, un atome de zirconium, un atome de bore et un atome d'aluminium ; R et R' sont choisis, de manière individuelle, parmi des radicaux alkyle contenant de 1 à 4 atomes de carbone ; la somme de chaque entier x+y et w+z est égale à 3 ou 4 en fonction de la valence du radical M ou M' associé, en fonction des cas, et est par conséquent égale à 4, à l'exception du cas dans lequel le radical associé M ou M' représente un atome de bore ou un atome d'aluminium, où elle est égale à 3 ; et r représente une valeur de 1 à 15 ;
dans lequel ledit organosilane représente au moins une matière répondant à la formule (IV), (V) ou (VI), plus précisément :
un organosilane polysulfure répondant à la formule (IV), à savoir :
**(IV)** **Z - R¹ - Sₘ - R¹ - Z**
dans laquelle m représente un nombre dans la plage de 2 à 8, la valeur moyenne pour m se situant dans la plage de
(1) de 2 à 2,6 ou
(2) de 3,5 à 4,5 ;
dans laquelle Z répond aux formules reprises ci-après : 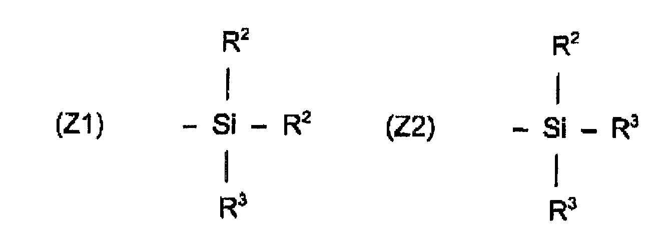 et 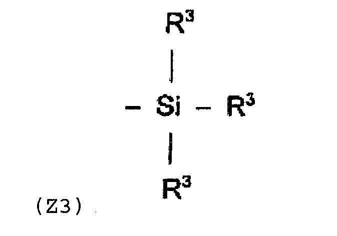 dans laquelle les radicaux R² représentent des radicaux identiques ou différents et sont choisis, de manière individuelle, parmi le groupe comprenant des radicaux alkyle contenant de 1 à 4 atomes de carbone et un radical phényle ; les radicaux R³ représentent des groupes alcoxy identiques ou différents, les radicaux alkyle du groupe alcoxy ou des groupes alcoxy représentant des radicaux alkyle choisis de manière indépendante parmi le groupe comprenant un radical méthyle, un radical éthyle, un radical n-propyle, un radical isopropyle, un radical n-butyle et un radical isobutyle ; et les radicaux R¹ représentent des radicaux choisis parmi le groupe comprenant des radicaux alkyle substitués ou non substitués contenant au total de 1 à 18 atomes de carbone et des radicaux aryle substitués ou non substitués contenant au total de 6 à 12 atomes de carbone ;
un alkylalcoxysilane répondant à la formule (V), à savoir :
**(V)** **(OR⁴)₃ - Si - R⁵**
dans laquelle les radicaux R⁴ peuvent être identiques ou différents et représentent des radicaux alkyle choisis parmi le groupe comprenant un radical méthyle, un radical éthyle, un radical n-propyle et un radical isopropyle ; et R⁵ est choisi parmi le groupe comprenant des radicaux alkyle contenant de 1 à 18 atomes de carbone et des radicaux aryle ou encore des radicaux aryle substitués par un ou plusieurs groupes alkyle, contenant de 6 à 12 atomes de carbone ; et
un organosilane fonctionnel répondant à la formule (VI), à savoir :
**(VI)** **(OR⁶)₃ - Si - (CH₂)_{y}** - **Y**
dans laquelle les radicaux R⁶ sont identiques ou différents et représentent des radicaux alkyle choisis parmi le groupe comprenant un radical méthyle, un radical éthyle, un radical n-propyle et un radical isopropyle ; y représente un entier de 1 à 12 et Y est choisi parmi le groupe comprenant un radical amino primaire, un radical mercapto, un radical époxyde, un radical thiocyanate, un radical phényle, un radical méthacrylate, un radical uréido, un radical isocyanate et un radical d'éthylènediamine.

2. Procédé selon la revendication 1, dans laquelle ledit cosolvant est choisi parmi le groupe comprenant l'heptane, l'hexane et le cyclohexane ou encore leurs mélanges, et ledit agent de transfert de chaîne et le fluorure de tétrabutylammonium.

3. Procédé selon l'une quelconque des revendications précédentes, dans lequel ledit élastomère hôte représente au moins un membre du groupe comprenant des homopolymères et des copolymères du 1,3-butadiène et de l'isoprène, des copolymères du styrène avec au moins un membre du groupe comprenant le 1,3-butadiène et l'isoprène, des polymères et des copolymères du 1,3-butadiène et/ou de l'isoprène avec du styrène couplés à l'étain, et des copolymères du styrène couplés à l'étain avec au moins un membre du groupe comprenant le 1,3-butadiène et l'isoprène, et leurs mélanges ou bien
dans lequel ledit élastomère hôte représente au moins un membre choisi parmi le groupe comprenant des homopolymères et des copolymères du 1,3-butadiène et de l'isoprène, et des copolymères du 1,3-butadiène et/ou de l'isoprène avec du styrène, ladite fonctionnalité terminale représentant un alcoxysilane, les radicaux alkyle dudit alcoxysilane représentant au moins un membre du groupe constitué par un radical éthyle, un radical méthyle, un radical n-propyle et un radical isopropyle, et leurs mélanges.

4. Procédé selon l'une quelconque des revendications 1 et 2, dans lequel R est choisi parmi le groupe comprenant un radical méthyle, un radical éthyle, un radical n-propyle, un radical isopropyle, un radical n-butyle et un radical isobutyle.

5. Procédé selon l'une quelconque des revendications précédentes, dans lequel ledit précurseur de matière de charge représente au moins un membre du groupe constitué par :
(A) le tétraéthoxy orthosilicate, l'éthoxyde de titane, le n-propoxyde de titane, le tri-sec butoxyde d'aluminium, le tert-butoxyde de zirconium, le n-butoxyde de zirconium, le tétra-n-propoxy zirconium et l'éthoxyde de bore, le triéthoxysilicate de méthyle et le diéthoxysilicate de diméthyle ; ou bien
(B) le di-s-butoxyaluminoxy triéthoxysilane et l'hexaéthoxydisiloxane.

6. Procédé selon l'une quelconque des revendications précédentes, dans lequel ladite matière de polysulfure d'organosilane est un bis-(3-triéthoxysilylpropyl) disulfure possédant en moyenne de 2 à 2,6 ou de 3,5 à 4 atomes de soufre dans son pont polysulfure.

7. Procédé selon l'une quelconque des revendications précédentes, dans lequel ledit alkylalcoxysilane (VI) représente au moins un membre choisi parmi le groupe constitué par le propyltriéthoxysilane, le méthyltriéthoxysilane, l'hexadécyltriéthoxysilane et est l'octadécyltriéthoxysilane ;
ledit organosilane fonctionnel répondant à la formule (VI) est choisi parmi le groupe comprenant le 3-aminopropyl triéthoxysilane, le 2-aminoéthyl triéthoxysilane, le 4-aminobutyl triéthoxysilane, le 3-mercaptopropyl triéthoxysilane, le 2-mercaptoéthyl triéthoxysilane, le 4-mercaptobutyl triéthoxysilane, le 3-(glycidoxypropyl) triéthoxysilane, le 3-thiocyanatopropyl triéthoxysilane, le vinyltriéthoxysilane, l'uréidopropyl triéthoxysilane, le 3-isocyanatopropyl triéthoxysilane ou la N-(3-triéthoxysilyl) propyl éthylènediamine.

8. Procédé selon la revendication 3, dans lequel ledit élastomère couplé à l'étain représente le produit que l'on obtient en faisant réagir au moins un diène conjugué ou en faisant réagir du styrène avec au moins un diène conjugué, ledit diène étant choisi parmi le groupe comprenant le 1,3-butadiène et l'isoprène, dans une solution d'un solvant organique et en présence d'un catalyseur à base d'organolithium, avant de faire réagir le polymère vivant avec au moins un composé répondant à la formule R⁷ ₄ - SnXₙ, où n représente un entier de 1 à et y compris 4, X représente un atome de chlore ; et R⁷ représente un radical alkyle choisi parmi le groupe comprenant un radical méthyle, un radical éthyle, un radical propyle ou un radical butyle.
